# EUROPÄISCHE PATENTANMELDUNG

(11) **EP 0 862 971 A2**
(43) Veröffentlichungstag der Anmeldung: **09.09.1998**
(21) Anmeldenummer: 98103551.2
(22) Anmeldetag: 28.02.1998
(51) Int. Cl.: B25C 1/18

(54) **Bolzenmagazinstreifen**

(30) Priorität: 08.03.1997 DE 19709566
(71) Anmelder: Beto-Tornado GmbH, D-44379 Dortmund (DE)
(72) Erfinder: Kersten, Olaf, Dr.-Ing., 47802 Krefeld (DE)
(74) Vertreter: Sparing - Röhl - Henseler Patentanwälte

(57) **Zusammenfassung**

Die Erfindung betrifft einen Bolzenmagazinstreifen aus Kunststoff mit einer Vielzahl von Rondellen (1), die miteinander über sich in Achsrichtung der Rondelle (1) erstreckende dünne Stege (2) verbunden sind, wobei jede Rondelle (1) aus einem Außenzylinder (4) und einem mit Abstand dazu angeordneten Innenzylinder (5) besteht, wobei der Innenzylinder (5) über Stege (6) mit dem Außenzylinder (4) verbunden ist.

## Beschreibung

Die Erfindung betrifft einen Bolzenmagazinstreifen nach dem Oberbegriff des Anspruchs 1.

Bolzenmagazinstreifen aus Kunststoff für pulverkraftbetriebene Bolzensetzgeräte, die aus einer Vielzahl von gelenkig aneinandergereihten Rondellen zur Aufnahme von zu setzenden Bolzen bestehen. Die Rondelle besitzen hierbei eine relativ große Wandstärke etwa entsprechend der Differenz zwischen den Durchmessern von Bolzenkopf und Bolzenschaft. Dies führt dazu, daß die Rondelle beim Bolzensetzen häufig zumindest teilweise unter dem Bolzenkopf hängen bleibt und sich nicht vollständig vom Bolzen trennt.

Aufgabe der Erfindung ist es, einen Bolzenmagazinstreifen nach dem Oberbegriff des Anspruchs 1 zu schaffen, bei dem eine vollständige Trennung von Rondelle und Bolzen beim Bolzensetzen sichergestellt ist.

Diese Aufgabe wird entsprechend dem kennzeichnenden Teil des Anspruchs 1 gelöst.

Hierdurch wird erreicht, daß sich innerhalb der Rondelle ein entsprechend dünnwandiger Innenzylinder mit Abstand zu einem umgebenden Außenzylinder befindet, der leicht verformbat ist und dazu führt, daß sich die Rondelle beim Bolzensetzen sicher vom Bolzen trennt. Außerdem wird hierdurch weniger Kunststoffmaterial für den Bolzenmagazinstreifen benötigt.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

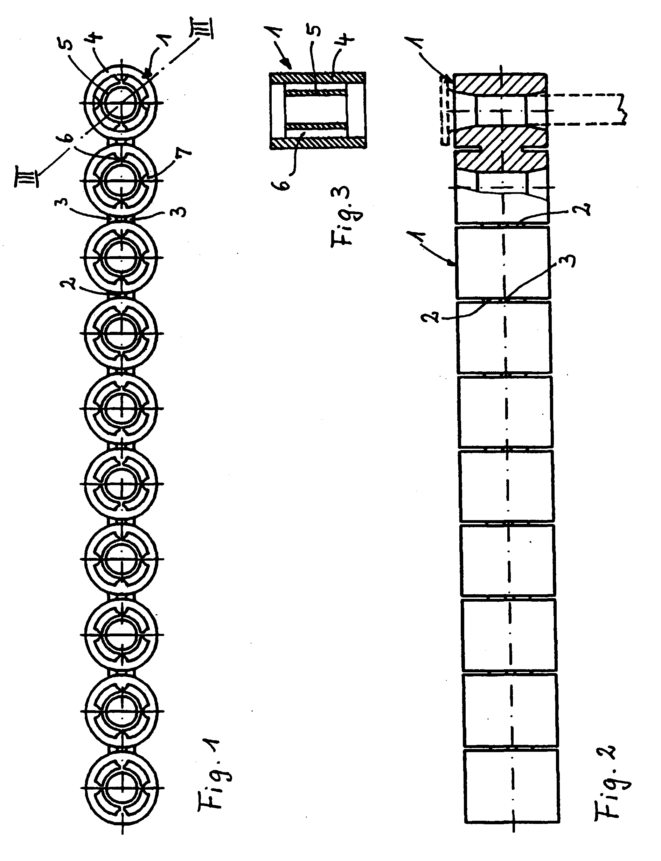

Fig. 1 zeigt eine Draufsicht auf einen Bolzenmagazinstreifen.

Fig. 2 zeigt teilweise im Schnitt eine Seitenansicht des Bolzenmagazinstreifens von Fig. 1.

Fig. 3 zeigt einen Schnitt längs der Linie III-III von Fig. 1.

Der dargestellte Bolzenmagazinstreifen umfaßt eine Vielzahl von Rondellen 1, die miteinander über sich in Achsrichtung der Rondelle 1 erstreckende dünne Stege 2 verbunden sind. Hierbei ist jeder Steg 2 vorzugsweise auf jeder Seite über eine schmale, sich in Längsrichtung des Bolzenmagazinstreifens erstreckende Rippe 3 versteift.

Jede Rondelle 1 besteht aus einem Außenzylinder 4 und einem mit Abstand darin angeordneten Innenzylinder 5. Außenzylinder 4 und Innenzylinder 5 sind über Stege 6 miteinander verbunden. Die Stege 6 weisen zweckmäßigerweise benachbart zum Außenzylinder 4 eine in Draufsicht etwa halbkreisförmige Verdickung 7 auf, die unmittelbar benachbart zum Innenzylinder 5 in einem kurzen schmalen Stegabschnitt endet. Im dargestellten Fall sind vier Stege 6 vorgesehen, es können aber auch weniger oder mehr sein.

Diese Ausbildung führt dazu, daß vermieden wird, daß sich die Rondelle 1 beim Bolzensetzen nicht vollständig von den Bolzen trennen und unter den Bolzenköpfen nicht wenigstens teilweise hängen bleiben.

Zweckmäßigerweise sind die Innenzylinder 5 zumindest an einer Stirnseite der Rondelle 1 gegenüber den Außenzylindern 4 zurückversetzt, so daß der Übergangsbereich zwischen Schaft und Kopf des Bolzens besser aufgenommen wird.

## Patentansprüche

1. Bolzenmagazinstreifen aus Kunststoff mit einer Vielzahl von miteinander gelenkig verbundenen Rondellen (1), **dadurch gekennzeichnet**, daß jede Rondelle (1) aus einem Außenzylinder (4) und einem mit Abstand dazu angeordneten Innenzylinder (5) besteht, wobei der Innenzylinder (5) über Stege (6) mit dem Außenzylinder (4) verbunden ist.

2. Bolzenmagazinstreifen nach Anspruch 1, dadurch gekennzeichnet, daß die Innenzylinder (5) zumindest an einer Stirnseite der Rondelle (1) gegenüber den Außenzylindern (4) zurückversetzt sind.

3. Bolzenmagazinstreifen nach Anspruch 1 oder 2, dadurch gekennzeichnet, daß die Stege (6) benachbart zum Außenzylinder (4) eine in Draufsicht etwa halbkreisförmige Verdickung (7) aufweisen, die unmittelbar benachbart zum Innenzylinder (5) endet.

4. Bolzenmagazinstreifen nach einem der Ansprüche 1 bis 3, dadurch gekennzeichnet, daß die Rondelle (1) durch schmale Stege (2) verbunden sind, die durch sich quer hierzu erstreckende Rippen (3) versteift sind.
